(19) Europäisches Patentamt
European Patent Office
Office européen des brevets

(11) **EP 2 251 997 A1**

(12) **EUROPEAN PATENT APPLICATION**
published in accordance with Art. 153(4) EPC

(43) Date of publication:
**17.11.2010 Bulletin 2010/46**

(21) Application number: **09712588.4**

(22) Date of filing: **19.02.2009**

(51) Int Cl.:
*H04J 11/00* (2006.01)　　*H04B 7/02* (2006.01)
*H04B 7/12* (2006.01)　　*H04L 27/01* (2006.01)
*H04W 52/04* (2009.01)　　*H04W 72/04* (2009.01)

(86) International application number:
**PCT/JP2009/052895**

(87) International publication number:
**WO 2009/104679 (27.08.2009 Gazette 2009/35)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **20.02.2008 JP 2008039370**

(71) Applicant: **Sharp Kabushiki Kaisha**
**Osaka-shi**
**Osaka 545-8522 (JP)**

(72) Inventors:
• **HAMAGUCHI, Yasuhiro**
**Osaka 545-8522 (JP)**
• **NAMBA, Hideo**
**Osaka 545-8522 (JP)**
• **TO, Shimpei**
**Osaka 545-8522 (JP)**
• **YOKOMAKURA, Kazunari**
**Osaka 545-8522 (JP)**
• **KUBOTA, Minoru**
**Osaka 545-8522 (JP)**

(74) Representative: **Müller - Hoffmann & Partner**
**Patentanwälte**
**Innere Wiener Strasse 17**
**81667 München (DE)**

(54) **WIRELESS TRANSMITTER, WIRELESS RECEIVER, WIRELESS COMMUNICATION SYSTEM, AND WIRELESS TRANSMISSION METHOD**

(57)　In a frequency control single carrier system, a frequency diversity gain is obtained in transmission diversity with one symbol. A wireless transmission apparatus, which has a plurality of antennas and performs radio transmission in a single carrier communication system, comprises a DFT unit (4) time-frequency converting a plurality of input time-domain signals to output a plurality of frequency-domain signals, a spectrum encoding unit(5) encoding each of the output frequency-domain signals, and a transmission unit (6-1 to 11-2) frequency-time converting the encoded frequency-domain signal to radio-transmit a time-domain signal using at least one antenna.

*FIG.1*

EP 2 251 997 A1

**Description**

Technical Field

The present invention relates to a wireless transmission apparatus which performs radio transmission in a single carrier communication system, a wireless reception apparatus, a wireless communication system, and a wireless transmission method.

Background Art

Recently, the research of a next generation mobile communication system has been carried out energetically and a single frequency reuse cellular system which uses the same frequency band in each cell has been proposed as a method for improving the frequency utilization efficiency of a system. For a communication in a downlink, that is, from a base station apparatus to a mobile station apparatus, an OFDMA (Orthogonal Frequency Division Multiple Access) system has become the most important candidate. The OFDMA system is a system performing communication by dividing a resource block, which is an access unit composed of a time axis and a frequency axis, among plural mobile terminal apparatuses by using an OFDM signal of information data modulated in 64QAM (64-ary Quadrature Amplitude Modulation), BPSK (binary Phase Shift Keying), or the like. The use of the OFDM signal sometimes increases a PARR (Peak to Average Power Ratio) considerably. Such a high peak power does not matter greatly in the down link communication having a comparatively sufficient ability in a transmission power amplification function, but becomes a fatal problem in an uplink communication having an insufficient ability in the transmission power amplification function, that is, in the communication from the mobile station apparatus to the base station apparatus.

Accordingly, single carrier communication systems each having a comparatively low PAPR have been proposed for the uplink communication. One of them is DFT-S-OFDM (Discrete Fourier Transform-Spread-OFDM (Non-patent document 1). Fig. 9 is a block diagram showing an outline configuration of a transmitter employing the DFT-S-OFDM system. An encoding unit 100 error-correction-encodes input transmission data and a modulation unit 101 performs modulation such as the BPSK (this modulation is called the first modulation hereinafter). Further, a S/P (serial /parallel) conversion unit 102 converts a serial signal into a parallel signal, and then a DFT (Discrete Fourier Transform) unit 103 performs Fourier transform to convert a time axis signal into a frequency signal.

The frequency signal converted by the DFT unit 103 is provided to the input of an IDFT (Inverse Discrete Fourier Transform) unit 105 according to a rule to be described below via a sub-carrier allocation unit 104. Zero is inserted into an IDFT point having no input and a temporal waveform is obtained by inverse Fourier transform. After the subsequent insertion of a guard interval through a GI (Guard Interval) unit 106, these temporal waveforms are converted into a serial signal by a P/S (Parallel/Serial) conversion unit 107. This serial signal is converted into an analog signal by a D/A (Digital/ Analog) conversion unit 108 and further frequency-converted into a radio frequency band signal by an RF (Radio Frequency) unit 109 to be transmitted through an antenna which is not shown in the drawing. In a system multiplexing data of plural users, the number of the points in the inverse Fourier transform IDFT is made larger than the number of the points in the discrete Fourier transform DFT and a sub-carrier provided with the zero insertion is used by another mobile terminal apparatus.

The data generated in this manner is equivalent to the data of single carrier modulation and has a low peak to average power ratio PAPR. Further, the insertion of the guard interval enables the data to be processed without inter-symbol interference as in an OFDM signal (in the present specification, a period of the guard interval insertion, i.e., a data processing unit of DFT, is called a "symbol"). In addition, since the frequency waveform is once generated in the discrete Fourier transform DFT, there is a merit of facilitating the control of frequency axis.

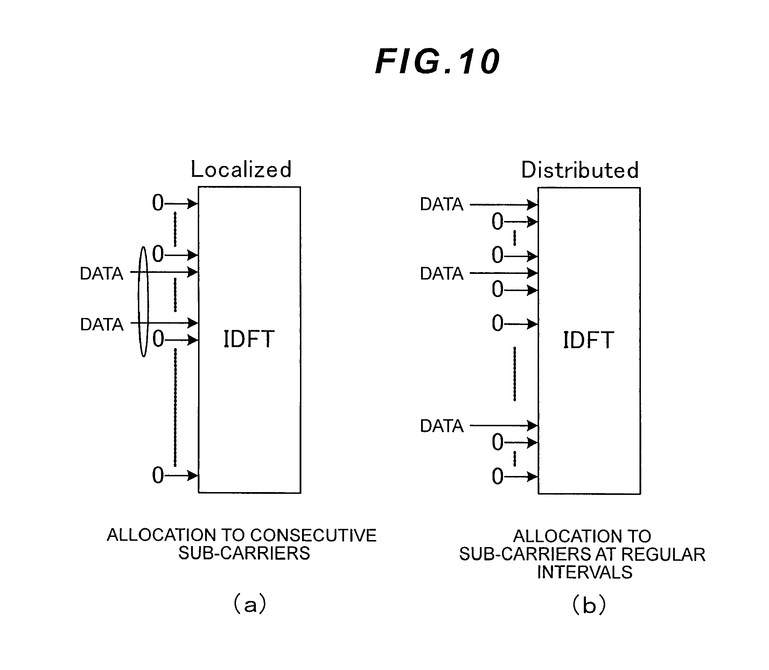

Two methods have been proposed for the rule of this frequency allocation. One is a localized allocation system (hereinafter, called "L allocation "), and the other one is a distributed allocation system (hereinafter, called "D allocation "). FIG. 10 (a) is a diagram showing an example of the L allocation and FIG.10(b) is a diagram showing an example of the D allocation. As shown in the drawing, the L allocation is a system of allocating the frequency data after the discrete Fourier transform to the input of the inverse discrete Fourier transform IDFT consecutively without changing its allocation. Further, the D allocation is a system of allocating the same data to the input of the inverse discrete Fourier transform IDFT discretely with regular intervals.

Non-patent document 2 describes a transmission diversity technique which can be used in the DFT-S-OFDM system. Fig. 1 of this document illustrates a transmission diversity method called STBC (Space Time Block Coding). This method is a method of obtaining a diversity gain by encoding transmission data for transmission and decoding the data encoded in the transmission apparatus for reception. This method is known to have the best performance for the transmission diversity method which does not feedback propagation path information. Non-patent document 2 shows a method of transmitting, when transmitting transmission data S1 and S2 using two antennas, S1 from a first transmission antenna and S2 from a second transmission antenna in the first symbol and S2* from the first transmission antenna and -S1* from the second transmission antenna in the subsequent symbol. This is indicated by a formula (1) when expressed in a matrix.

[Formula 1]

$$\begin{pmatrix} S1 & S2^* \\ S2 & -S1^* \end{pmatrix} \quad \cdots \quad (1)$$

S1 and S2 are transmitted at the same time in the first symbol from the different antennas, respectively, and S2* and -S1* are transmitted in the next symbol also at the same time from the different antennas, respectively. Note that "*" means complex conjugate. When encoded by (1), since perfect orthogonalization is performed, a reception apparatus can calculate the transmission data by decoding. Further, when the frequency responses of propagation paths of the antennas are defined as H1 and H2, respectively, a formula (2) multiplies the calculated S1 and S2 as coefficients and the diversity gain can be obtained at a maximum.

[Formula 2]

$$|H1|^2 + |H2|^2 \quad \cdots \quad (2)$$

Further, Non-patent document 3 shows an STBC encoding method for four antennas. "Formula 10" in the document is indicated by a formula (3) in a transposed form.

[Formula 3]

$$\begin{pmatrix} S1 & -S2^* & -S3^* & S4 \\ S2 & S1^* & -S4^* & -S3 \\ S3 & -S4^* & S1^* & -S2 \\ S4 & S3^* & S2^* & S1 \end{pmatrix} \quad \cdots \quad (3)$$

The formula (3), since rows or columns are not perfectly orthogonalized against each other (e. g. , first row and fourth row, and second row and third row) differently from the formula (1), cannot provide the diversity gain from the four antennas at a maximum, but the diversity gain becomes higher than that when using two antennas. Further, Non-patent document 2 shows a receiving method which performs encoding using the formula (3) and can obtain the diversity gain at a maximum.

Further, Non-patent document 3 also describes SFBC (Space Frequency Block Coding) which is a technique performing encoding in frequency. This is a transmission diversity system which is combined with a multi-carrier technique such as an OFDM signal, and the SFBC is a system of performing the encoding in space and frequency while the STBC is a system of performing the encoding in space and time.

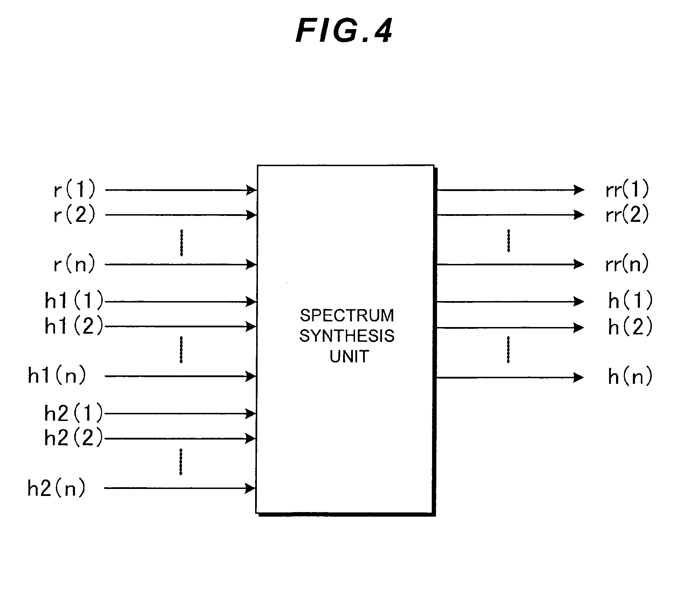

Meanwhile, Non-patent document 2 also describes CDD (Cyclic Delay Diversity). This is a method which can obtain the diversity effect by providing cyclic delay to one antenna output against the other antenna output, and the method is considered to be effective especially for a case of small delay dispersion. The signal generation method of this CDD is described in "Fig. 4" and the like of the same document. Note that, the CDD does not add the propagation paths in energy but treats the propagation paths as a synthesized propagation path, and thereby comes short of the STBC in the diversity gain.

Hereinafter in the present specification, the system performing communication by frequency-converting a single carrier signal and allocating the converted information to a sub-carrier of a multi-carrier signal such as the OFDM signal is called "spectrum control single carrier system". In addition to the DFT-S-OFDM, a transmission method based on a CI (Carrier Interferometry) signal as shown in Non-patent document 4 corresponds to the spectrum control single carrier system.

Non-patent document 1: 3GPP R1-050702 "DFT-Spread OFDM with Pulse Shaping Filter in Frequency domain in Evolved UTRA Uplink" NTT DoCoMo
Non-patent document 2: 3GPP R1-062192 "Consideration on transmit diversity in E-UTRA uplink" Toshiba
Non-patent document 3: 3GPP R1-072047 "Further results on QO-SFBC as a TxD scheme for 4 transmit antennas" LSI Corporation
Non-patent document 4: The 17th Annual IEEE International Symposium on Personal, Indoor and Mobile Radio Communications (PIMRC'06) "MICROSCOPIC SPECTRUM CONTROL TECHNIQUE USING CARRIER INTERFEROMETRY FOR ONE-CELL REUSE SINGLE CARRIER TDMA SYSTEMS" Osaka University

Disclosure of the Invention

Problem to be solved by the invention

However, when STBC is used for the spectrum control single carrier system as shown in Non-patent document 2, the diversity gain can be obtained at a maximum but there is a problem the encoding needs to be carried out across the plural symbols. In the case of requiring the encoding across m symbols in this manner, a communication frame needs to be configured in a multiple of m symbols. In this case, there arises a problem that data to be processed as quickly as possible such as a control signal cannot be demodulated until all the encoded symbols have been received. Further, the conventional concept of encoding has been provided only when data is encoded, there has been no example of applying an encoding method to the spectrum which is instant frequency information of the data.
Further, conventionally the SFBC assumes a typical OFDM signal and needs not to take the influence of the PAPR into consideration, but, in the case of applying the SFBC to the DFT-S-OFDM signal which assumes to have a good PAPR characteristic, there arises a problem that the merit of using the DFT-S-OFDM may be lost unless the system is realized by taking an influence to the PAPR into consideration.
The present invention has been achieved in view of such a situation and aims at providing a wireless transmission apparatus, a wireless reception apparatus, a wireless communication system, and a wireless transmission method, which can obtain a frequency diversity gain with one symbol in the transmission diversity of a frequency control single carrier system.

Means for solving the problem

(1) For achieving the above object, the present invention provides a means as follows. That is, a wireless transmission apparatus of the present invention, which has a plurality of antennas and performs radio transmission by encoding a signal used in a single carrier communication system, comprises: a time-frequency conversion unit time-frequency converting a plurality of input time-domain signals to output a plurality of frequency-domain signals; a spectrum encoding unit encoding each of the output frequency-domain signals; and a transmission unit frequency-time converting the encoded frequency-domain signal to radio-transmit a time-domain signal using at least one antenna.
In this manner, each of the frequency-domain signals is encoded in the spectrum encoding unit, and thereby it is possible to obtain the diversity gain at a maximum when decoded in an apparatus on the receiving side.
(2) Further, in the wireless transmission apparatus of the present invention, the spectrum encoding unit encodes the frequency-domain signal to be transmitted from at least one antenna so that PAPR (Peak to Average Power Ratio) characteristics before and after the encoding become the same.
In this manner, the encoding is performed on the frequency-domain signal to be transmitted from at least one antenna so that the PAPR characteristics before and after the encoding become the same, and thereby it is possible to keep a preferable state for the PAPR characteristic of the signal to be transmitted from the antenna for transmitting the frequency-domain signal.
(3) In addition, the wireless transmission apparatus of the present invention further comprises a control unit controlling transmission power of the antenna for transmitting the frequency-domain signal having the same PAPR characteristics before and after the encoding to be larger than transmission power of the antenna for transmitting a signal except the frequency-domain signal having the same PAPR characteristics before and after the encoding.
In this manner, the transmission power of the antenna for transmitting the frequency-domain signal having the same PAPR characteristics before and after the encoding is made larger than the transmission power of the antenna for transmitting the signal except the frequency-domain signal having the same PAPR characteristics before and after the encoding, and thereby it is possible to perform the transmission in consideration of an influence of the antenna to deteriorate the PAPR characteristic. That is, while the PAPR characteristic is deteriorated in the signal except the frequency-domain signal which has the same PAPR characteristics before and after the encoding, it becomes possible to keep an appropriate transmission diversity gain for an entire system and to suppress an influence of the PAPR characteristic deterioration by controlling the transmission power of the antenna for transmitting the frequency-domain signal having the same PAPR characteristics before and after the encoding to be larger than the transmission power of the other signal.

(4) Moreover, the wireless transmission apparatus of the present invention still further comprises a control unit having a table preliminarily associating a transmission power step with each of a plurality of transmission power values and individually controlling, according to the table, the transmission power of the antenna for transmitting the frequency-domain signal having the same PAPR characteristics before and after the encoding and the transmission power of the antenna for transmitting the signal except the frequency-domain signal having the same PAPR characteristics before and after the encoding.

In this manner, the transmission power in each of the antennas is controlled individually, and thereby it becomes possible to efficiently apply a technique which performs the spectrum encoding on the DFT-S-OFDM signal, to a transmission power control system.

(5) Further, in the wireless transmission apparatus of the present invention, the control unit, while controlling the transmission power so as to use only the antenna for transmitting the frequency-domain signal having the same PAPR characteristics before and after the encoding in the transmission power step in which the transmission power value is smaller than a predetermined value, controls the transmission power so as to use the antenna for transmitting the frequency-domain signal having the same PAPR characteristics before and after the encoding and the antenna for transmitting the signal except the frequency-domain signal having the same PAPR characteristics before and after the encoding in the transmission power step in which the transmission power value is larger than a predetermined value.

In this manner, it becomes possible to build an efficient transmission power control system by transmitting signals having the same power without depending on the PAPR characteristic in the transmission power which does not receive the PAPR influence and by increasing only the transmission power of the antenna for transmitting the signal having a good PAPR characteristic in the transmission power in which the influence of the PAPR characteristic appears.

(6) In addition, the wireless transmission apparatus of the present invention still further comprises a sub-carrier allocation unit allocating each of the frequency-domain signals encoded by the spectrum encoding unit to consecutive sub-carriers.

In this manner, each of the frequency-domain signals encoded by the spectrum encoding unit is allocated to the consecutive sub-carriers, and thereby the sub-carriers are not positioned apart from each other on the frequency axis and it becomes possible to increase a correlation of a frequency response. As a result, it becomes possible to improve a characteristic of a receiver such as SNR (Signal to Noise Ratio) versus error-rate characteristic, for example.

(7) Further, in the wireless transmission apparatus of the present invention, the sub-carrier allocation unit groups the plurality of sub-carriers into a plurality of groups and allocates each of the frequency-domain signals encoded by the spectrum encoding unit to the consecutive sub-carriers in the group.

In this manner, each of the frequency-domain signals encoded by the spectrum encoding unit is allocated to the consecutive sub-carriers in the group, and thereby the sub-carriers are not positioned apart from each other on the frequency axis and it becomes possible to increase the correlation of the frequency response. As a result, it becomes possible to improve the characteristic of the receiver such as the SNR versus error-rate characteristic, for example.

(8) Further, in the wireless transmission apparatus of the present invention, the sub-carrier allocation unit groups the sub-carriers such that the number of sub-carriers in the group becomes integer multiple of the number of the frequency-domain signals to be encoded by the spectrum encoding unit.

In this manner, the sub-carriers are grouped such that the number of sub-carriers in the group becomes integer multiple of the number of frequency-domain signals to be encoded by the spectrum encoding unit, and thereby the encoded frequency-domain signals are not allocated to the sub-carriers across the two groups and it becomes possible to increase the correlation of the frequency response.

(9) Further, in the wireless transmission apparatus of the present invention, the sub-carrier allocation unit selects the sub-carrier, to which the frequency-domain signal encoded by the spectrum encoding unit is allocated, on a basis of a squared absolute value of the frequency response.

In this manner, the sub-carrier, to which the frequency-domain signal encoded by the spectrum encoding unit is allocated, is selected on a basis of the squared absolute value of the frequency response, and thereby it becomes possible to realize a highly accurate spectrum-encoded DSC-DFT-S-OFDM by preferentially selecting the sub-carrier having the larger squared absolute value of the frequency response.

(10) Further, in the wireless transmission apparatus of the present invention, the sub-carrier allocation unit selects the sub-carrier, to which the frequency-domain signal encoded by the spectrum encoding unit is allocated, on a basis of frequency response variations of the neighboring sub-carriers.

In this manner, the sub-carrier, to which the frequency-domain signal encoded by the spectrum encoding unit is allocated, is selected on a basis of the frequency response variations of the neighboring sub-carriers, and thereby it becomes possible to realize a highly accurate spectrum-encoded DSC-DFT-S-OFDM by preferentially selecting the sub-carrier having a smaller frequency response variation against the neighboring sub-carriers.

(11) Further, in the wireless transmission apparatus of the present invention, the control unit controls the transmission power of a propagation path estimation symbol transmitted from the antenna for transmitting the signal except the frequency-domain signal having the same PAPR characteristics before and after the encoding to be larger than the transmission power of data transmitted from the same antenna.

In this manner, the transmission power of the propagation path estimation symbol transmitted from the antenna for transmitting the signal except the frequency-domain signal having the same PAPR characteristics before and after the encoding is controlled to be larger than the transmission power of the data transmitted from the same antenna, and thereby the apparatus on the receiving side is made possible to accurately estimate the propagation path between the transmission and reception antennas and also it becomes possible to reduce the influence of the PAPR deterioration.

(12) Further, a wireless reception apparatus of the present invention, which receives the signal transmitted from the wireless transmission apparatus according to (11), performs frequency synthesis according to a difference between the transmission power of the propagation path estimation symbol and the transmission power of the data to demodulate the data.

In this manner, the frequency synthesis is performed according to the difference between the transmission power of the propagation path estimation symbol and the transmission power of the data and the data is demodulated, and thereby it becomes possible to estimate the propagation path accurately using the propagation path estimation symbol transmitted in a high transmission power for improving the reliability of the communication and it becomes possible to reduce the influence of the PAPR deterioration.

(13) Further, a wireless communication system includes the wireless transmission apparatus according to (11) and the wireless reception apparatus according to (12).

With this configuration, the transmission power of the propagation path estimation symbol transmitted from the antenna for transmitting the signal except the frequency-domain signal having the same PAPR characteristics before and after the encoding is controlled to be larger than the transmission power of the data transmitted from the same antenna, and thereby it becomes possible to accurately estimate the propagation path between the transmission and reception antennas in the apparatus on the receiving side and also to reduce the influence of the PAPR deterioration.

(14) Further, a wireless transmission method, which performs radio transmission by using a plurality of antennas and by encoding a signal used in a single carrier communication system, comprises at least the steps of: time-frequency converting a plurality of input time-domain signals to output a plurality of frequency-domain signals in a time-frequency conversion unit; encoding each of the output frequency-domain signals in a spectrum encoding unit; and frequency-time converting the encoded frequency-domain signal to radio-transmit a time-domain signal using at least one antenna in a transmission unit.

In this manner, each of the frequency-domain signals is encoded in the spectrum encoding unit, and thereby it becomes possible to obtain the diversity gain at a maximum for the decoding in the apparatus on the receiving side.

Advantage of the invention

According to the present invention, each of the frequency-domain signals is encoded in the spectrum encoding unit, and thereby it becomes possible to obtain the diversity gain at a maximum for the decoding in the apparatus on the receiving side.

Brief Description of the Drawings

Fig. 1 is a block diagram showing an outline configuration of a DFT-S-OFDM signal transmission apparatus using spectrum encoding in the present invention.
Fig. 2 is a diagram showing a concept of operation in a spectrum encoding unit.
Fig. 3 is a block diagram showing an outline configuration of a reception apparatus in the present embodiment.
Fig. 4 is a diagram showing a concept of operation in a spectrum synthesis unit.
Fig. 5 shows a state of transmitting a propagation path estimation symbol and data in different transmission powers, respectively.
Fig. 6 is a diagram showing an example of sub-carrier allocation in DSC-DFT-S-OFDM.
FIG. 7(a) is a diagram showing an example of sub-carrier allocation in spectrum encoding of a DSC-DFT-S-OFDM signal.

FIG. 7(b) is a diagram showing an example of sub-carrier allocation in spectrum encoding of a DSC-DFT-S-OFDM signal.

Fig. 8 is a diagram showing an SNR (Signal to Noise Ratio) versus BER (Bit Error Rate) characteristic.

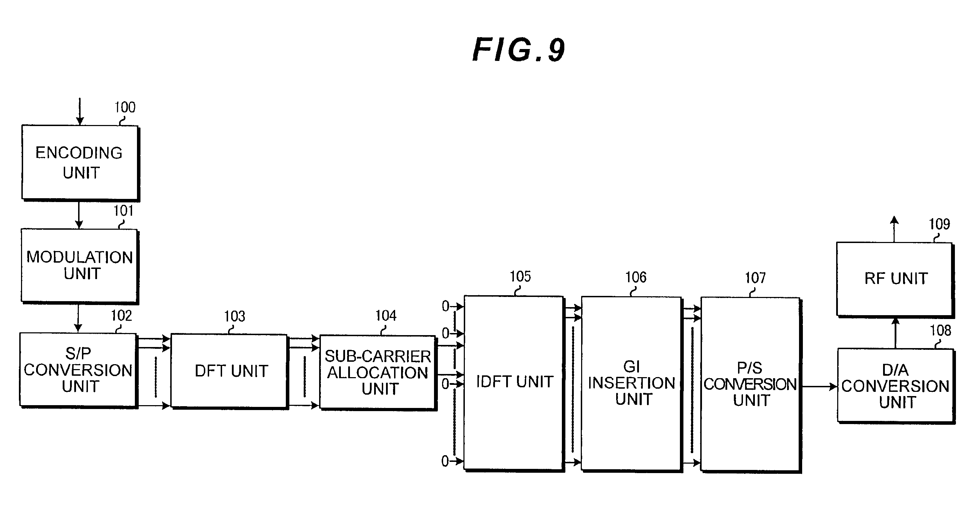

Fig. 9 is a block diagram showing an outline configuration of a DFT-S-OFDM system transmitter.

FIG.10(a) is a diagram showing an example of L allocation.

FIG.10(b) is a diagram showing an example of D allocation.

Description of the reference symbols

| | |
|---|---|
| 1 | Encoding unit |
| 2 | Modulation unit |
| 3 | S/P conversion unit |
| 4 | DFT unit |
| 5 | Spectrum encoding unit |
| 6-1, 6-2 | Sub-carrier allocation unit |
| 7-1, 7-2 | IDFT unit |
| 8-1, 8-2 | GI insertion unit |
| 9-1, 9-2 | P/S conversion unit |
| 10-1, 10-2 | D/A conversion unit |
| 11-1, 11-2 | RF unit |
| 21 | RF unit |
| 22 | A/D conversion unit |
| 23 | Symbol synchronization unit |
| 24 | S/P conversion unit |
| 25 | DFT unit |
| 26 | Propagation path estimation unit |
| 27 | Sub-carrier extraction unit |
| 28 | Spectrum synthesis unit |
| 29 | Weighting unit |
| 20 | IDFT unit |
| 31 | P/S conversion unit |
| 32 | Demodulation unit |
| 33 | Decoding unit |
| 34 | Control unit |

Best Modes for Carrying Out the Invention

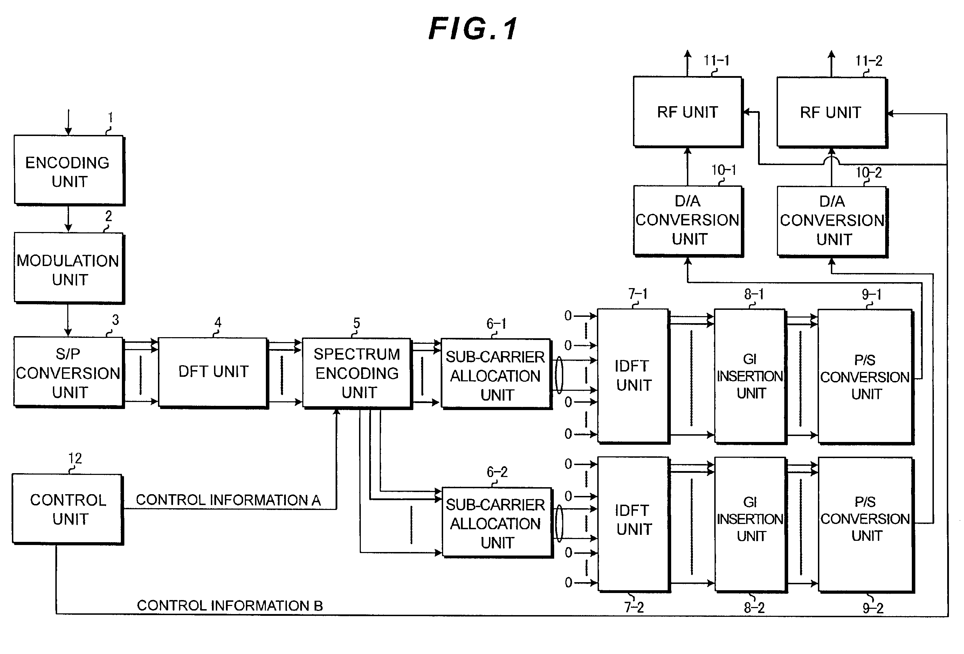

Next, embodiments according to the present invention will be described with reference to the drawings. Fig. 1 is a block diagram showing an outline configuration of a DFT-S-OFDM signal transmission apparatus using spectrum encoding in the present invention. Note that the number of transmission antennas N is assumed to be two when the transmission diversity is to be performed. In the embodiments hereinafter, the spectrum control single carrier system will be described by the use of the DFT-S-OFDM system. In the spectrum encoding, the encoding is assumed to be carried out for a pair of plural spectrums positioned as close as possible to each other. In the following embodiments, the number of transmission antennas used for performing the spectrum encoding is assumed to be two for simplicity of explanation. Further, in each of the embodiments, the following encoding is assumed to be used unless a particular description is provided.

Specifically, when two spectrum signals, a and b, are assumed to be transmitted, there is considered a method of making pairs of (a, b*) and (b*, -a*) and transmitting the pairs from different antennas, respectively, or a method of making pairs of (a, b) and (b*, -a*). Note that "*" shows complex conjugate. While the former method inserts signals deformed from the original spectrum into both of the pairs, the latter method has a pair of (a, b) which is not deformed and can keep the original spectrum in the spectrum encoding. This means that the PAPR characteristic of the original signal does not change.

(First embodiment)

In Fig. 1, an encoding unit 1 performs encoding such as error correction on input transmission data. A modulation unit 2 performs modulation such as the BPSK and QPSK. This modulation is digital modulation (first modulation). An S/P (Serial/Parallel) conversion unit 3 performs serial/parallel conversion in order to input a time-domain signal, which has been, for example, encoded or modulated, into a DFT (Discrete Fourier Transform) unit 4. In the present embodiment, the number of sub-carriers to be used, that is, the number of DFT points is assumed to be "n", and thereby the output of the S/P conversion unit 3 becomes a matrix of n.

The DFT unit 4 performs discrete Fourier transform (DFT) on the time axis signal to generate a frequency signal. The DFT unit 4 configures a time-frequency conversion unit. Further, a spectrum encoding unit 5 performs encoding on the input frequency signal. A sub-carrier allocation unit 6-1 or 6-2 allocates the frequency signal or the encoded frequency signal to a sub-carrier to be transmitted. An IDFT (Inverse Discrete Fourier Transform) unit 7-1 or 7-2 performs inverse discrete Fourier transform IDFT on the frequency signal allocated to the sub-carrier. The IDFT units 7-1 and 7-2 configure a frequency-time conversion means. In the present embodiment, the number of sub-carriers in a system band is assumed to be M (≥n), and thereby the number of IDFT points becomes M and zero is inserted in addition to n inputs. Usually, the sub-carrier to which this zero is inserted is used by another terminal.

GI insertion unit 8-1 or 8-2 inserts a guard interval (GI) defined by a system to the output of the IDFT unit 7-1 or 7-2. A P/S (Parallel/Serial) conversion unit 9-1 or 9-2 performs parallel/serial conversion on the output of the GI insertion unit 8-1 or 8-2. A D/A (Digital/Analog) conversion unit 10-1 or 10-2 performs digital signal to analog signal conversion on the output of the P/S conversion unit 9-1 or 9-1. Further, an RF unit 11-1 or 11-2 converts the signal into a transmission band and transmits the data from an antenna which is not shown in the drawing. This RF unit includes a high-gain amplifier (HPA: High Power Amplifier) for converting the signal to be transmitted into a high output power signal. Usually, there is a problem in the HPA that it is difficult to keep linearity up to a high output power region and high power consumption is required to keep the linearity, and thereby a single carrier modulation system having a good PAPR characteristic is selected in an uplink communication system. Further, a control unit 12 controls whether or not to perform the spectrum encoding (control information A) and controls the transmission power of the RF (Radio Frequency) signal (control information B). Note that the above units from the sub-carrier allocation unit 6-1 to the RF unit 11-2 configure a transmission part.

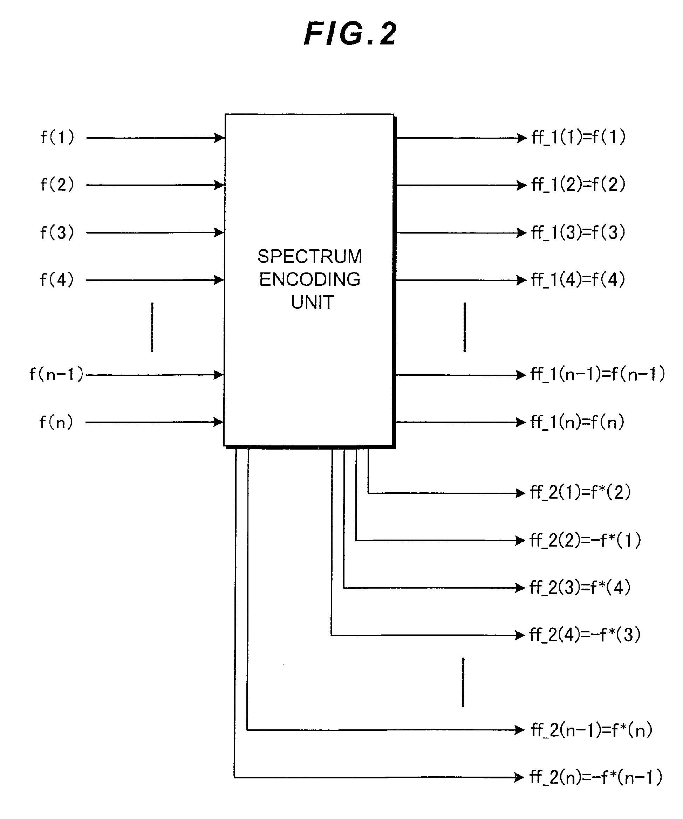

Fig. 2 is a diagram showing a concept of operation in the spectrum encoding unit. The spectrum encoding unit 5 receives the data which has been subjected to the first modulation, the DFT, and the conversion into the frequency signal. As described above, the number of the DFT points is assumed to be n (n is assumed to be a natural number and a multiple of 2), that is, n frequency signals f (k) are assumed to be input into the spectrum encoding unit 5 (k is a natural number equal to or smaller than n) . Here, it is assumed that n is a multiple of two because the spectrum encoding unit 5 performs the encoding with two input spectrums. The outputs of the spectrum encoding unit are denoted by ff_1 (k) and ff_2 (k).

Input (2m - 1)th (m is a natural number equal to or smaller than n/2) data f (2m - 1) and (2m) th (m is a natural number equal to or smaller than n/2) data f(2m) are encoded in a pair. Then, the spectrum encoding unit 5 outputs ff_1 (2m - 1) and ff_2 (2m) and these outputs satisfy a relationship of the following formula (4).

[Formula 4}

$$ff\_1(2m-1) = f(2m-1), \quad ff\_2(2m-1) = f(2m)^*$$
$$ff\_1(2m) = f(2m), \quad ff\_2(2m) = -f(2m-1)^* \quad \cdots \quad (4)$$

In the formula (4), "*" means complex conjugate. In this manner, it becomes possible to obtain the diversity gain at a maximum by the spectrum encoding for demodulation in a reception apparatus. Note that this requires a condition that there is little frequency variation between the neighboring sub-carriers.

The output of the spectrum encoding unit 5 is allocated to a sub-carrier to be actually used by the sub-carrier allocation unit 6-1 or 6-2. Assuming the L allocation, the spectrum-encoded data is allocated to the sub-carrier L + 1 to the sub-carrier L + n (L is an integer equal to or larger than 0 provided by the sub-carrier allocation unit and an offset number of a sub-carrier number determined according to a band used for transmission). As a result of such processing, ff_1 (k) and ff_2 (k) are transmitted from the RF unit 11-1 and the RF unit 11-2, respectively, in an RF band to be used actually.

In this manner, by performing the encoding in the spectrum encoding unit 5 so that a series to be transmitted at least from one antenna does not change from the original series, it becomes possible to keep a preferable state for the PAPR characteristic of the signal transmitted from the antenna to transmit this series.

However, this state does not consider the influence of the antenna system (RF unit 11-2 in the present embodiment) deteriorating the PAPR characteristic. This influence includes the quality deterioration of the signal itself because of signal distortion in the HPA, signal leakage (influence to another multiplexed signal) to the outside of the band in which the allocation is carried out, and influence to the outside of a system band (possibility of violating the radio law). Accordingly, the transmission power of the transmission antenna system possible to deteriorate the PAPR characteristic is made smaller than the transmission power of the antenna system providing little deterioration to the PAPR characteristics (specifically, made smaller than the transmission power of the antenna system without the PAPR deterioration), and thereby it becomes possible to suppress the influence of the PAPR characteristic deterioration while obtaining the transmission diversity gain as a system. Note that how much to be reduced is different depending on the characteristic of the HPA to be used.

Further, a reception apparatus receiving the spectrum-encoded signals having the transmission powers different from each other, which will be described in the following, is required to perform spectrum synthesis in consideration of a power difference when the difference exists between the transmission power of the propagation path estimation signal and the transmission power of the spectrum-encoded signal.

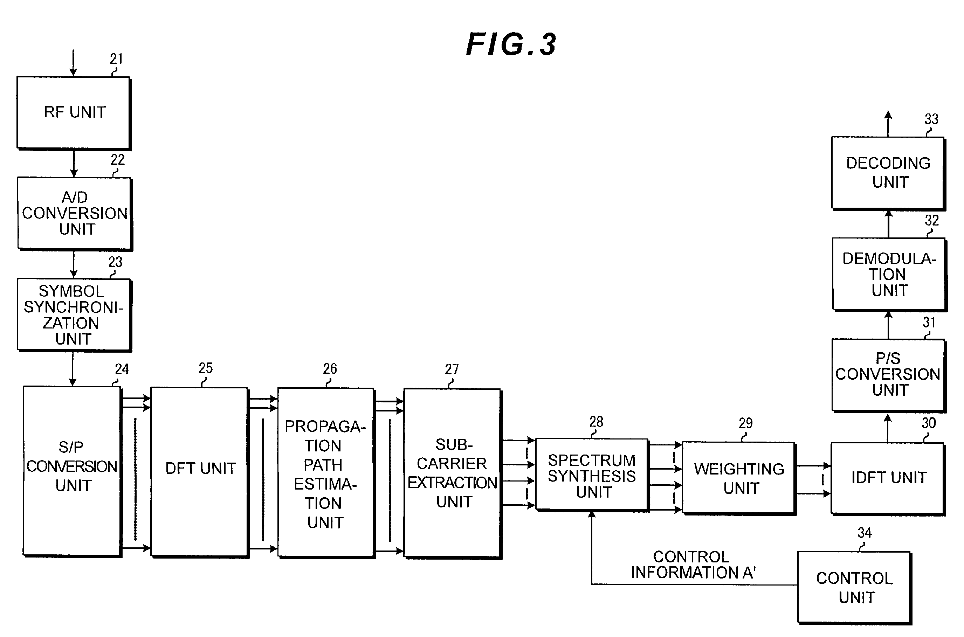

Fig. 3 is a block diagram showing an outline configuration of a reception apparatus in the present embodiment. In Fig. 3, an RF unit 21 converts a signal received by an antenna which is not shown in the drawing into a frequency band where A/D (Analog/Digital) conversion is available. An A/D conversion unit 22 converts the analog signal input from the RF unit 21 into a digital signal. A symbol synchronization unit 23 eliminates the GI from the spectrum control single carrier signal including the GI to synchronize the symbol and can provide the same function as that of the usual OFDM symbol synchronization. An S/P (Serial/Parallel) conversion unit 24 performs S/P (Serial/Parallel) conversion on the symbol-synchronized signal according to the number of DFT points in the following stage.

A DFT unit 25 converts the input time-domain signal into a frequency-domain signal. Usually, the number of processing points in this DFT unit 25 is M the same as the number of points in the IDFT unit in the transmission apparatus. A propagation path estimation unit 26 estimates a propagation path between the transmission apparatus and the reception apparatus for each of the antennas and each of the sub-carriers. A sub-carrier extraction unit 27 takes out the sub-carrier to be required for reception from the communication band. This sub-carrier extraction unit 27 has a function of extracting required propagation path information and the data.

A spectrum synthesis unit 28 synthesizes a spectrum. This spectrum synthesis unit 28 has the input of propagation path estimation results h1(k') and h2(k') (k' is a natural number) (frequency responses for each of the sub-carriers) for the respective transmission antennas and the input of the received data r(k). A weighting unit 29 has a function of weighting the input propagation path estimation results and received data, themselves, or the spectrum synthesis result rr(k) with a propagation path variation using MMSE, zero forcing, or the like.

An IDFT unit 30 converts the frequency-domain data into time-domain data. The number of points in this IDFT unit 30 is usually n the same as the number of points of the DFT unit used in the transmission. A P/S conversion unit 31 converts the output of the IDFT unit 30 into a serial data string. A demodulation unit 32 performs demodulation corresponding to the first modulation used in the transmission. A decoding unit 33 performs decoding (error correction) corresponding to the encoding used in the transmission apparatus. A control unit 34 designates whether or not to perform spectrum synthesis corresponding to the transmission apparatus (control information A').

Fig. 4 is a diagram showing a concept of operation in the spectrum synthesis unit. Note that the drawing shows the case in which the spectrum encoding has been performed on the transmission side. The spectrum synthesis unit 28 has the input of the propagation path information h1(k') of the sub-carrier used in the transmission between the first transmission antenna and the receiving antenna and the input of the propagation path information h2 (k') between the second antenna and the receiving antenna, and further has the input of the data information r(k). Here, "k" is assumed to be the same number as that used in the explanation at the time of transmission, but the generality is not lost thereby. Further, the spectrum synthesis unit 28 outputs the data rr (k) subjected to the spectrum synthesis processing. For the sub-carrier k, a relationship between the data information r(k) input into the spectrum synthesis unit 28 and the transmission data is expressed by a formula (5).

[Formula 5]

$$r(k) = h1(k) \times \mathit{ff}\_1(k) + h2(k) \times \mathit{ff}\_2(k) + n(k) \quad \cdots \quad (5)$$

Further, a formula (6) is obtained by breakdown into a formula of m using the formula (4) and the like.

[Formula 6]

$$r(2m-1) = h1(2m-1) \times ff\_1(2m-1) + h2(2m-1) \times ff\_2(2m-1) + n(2m-1)$$
$$= h1(2m-1) \times f(2m-1) + h2(2m-1) \times f(2m)^* + n(2m-1)$$
$$r(2m) = h1(2m) \times ff\_1(2m) + h2(m) \times ff\_2(2m) + n(2m)$$
$$= h1(m) \times f(2m) - h2(m) \times f(2m-1)^* + n(2m) \quad \cdots \quad (6)$$

In the formula (6), "n (k) " is a term representing noise. Hereinafter, the noise term is omitted for simplicity of explanation.
The spectrum synthesis unit 28 performs the spectrum synthesis every two frequency components (two sub-carriers) using the following formula (7).

[Formula 7]

$$rr(2m-1) = h1(2m-1)^* \times r(2m-1) - h2(2m) \times r(2m)^*$$
$$rr(2m) = h2(2m-1) \times r(2m-1)^* + h1(2m-1)^* \times r(2m) \quad \cdots \quad (7)$$

The formula (7) is developed in to a Formula (8).

[Formula 8]

$$rr(2m-1) = (|h1(2m-1)|^2 + |h2(2m)|^2)f(2m-1)$$
$$+ \{h1(2m-1)^* h2(2m-1) - h1(2m)^* h2(2m)\}f(2m)^*$$
$$rr(2m) = (|h1(2m)|^2 + |h2(2m-1)|^2)f(2m)$$
$$+ \{h1(2m-1)^* h2(2m-1) - h1(2m)^* h2(2m)\}f(2m-1)^* \quad \cdots \quad (8)$$

Each of the second terms in the formula (8) expresses an error caused by the difference in the frequency response of the neighboring subcarriers and becomes zero when the frequency response is the same between the sub-carriers neighboring each other. Here, for comparison, a result corresponding to the formula (8) for a case in which the same data is transmitted from both of the antennas without encoding is shown as follows.

[Formula 9]

$$rr(2m-1) = (h1(2m-1) + h2(2m-1))f(2m-1)$$
$$rr(2m) = (h1(2m) + h2(2m))f(2m) \quad \cdots \quad (9)$$

While the formula (9) is expressed by a signal power of a propagation path simply synthesized from the respective propagation paths, the formula (8) is expressed by a sum of the respective powers of the propagation paths and thereby the diversity effect for each of the antennas is apparent.
The outputs of the spectrum synthesis unit 28 are the signal rr (k) shown in the formula (8) and the propagation path frequency responses after the synthesis. The propagation path frequency responses are a coefficient of f (2m - 1) in the upper part of the formula (8) and a coefficient of f (2m) in the lower part of the formula (8), respectively, and shown by a formula (10).

[Formula 10]

$$h(2m-1) = (|h1(2m-1)|^2 + |h2(2m)|^2)$$
$$h(2m) = (|h1(2m)|^2 + |h2(2m-1)|^2) \quad \cdots \quad (10)$$

The spectrum-synthesized signal is, as in the formula (8), subjected to the zero forcing or MMSE processing according to the propagation path frequency responses after the synthesis shown in the formula (10) in the weighting unit 29 and subsequently the data is demodulated in a process reversed from the one on the transmission side.

In this manner, in the spectrum control single carrier system, by performing the spectrum encoding in the transmission apparatus and performing the spectrum synthesis corresponding to the encoding in the reception apparatus, it becomes possible to improve communication characteristic.

As described above, the synthesis requires correction when the transmission power difference exists between the propagation path estimation symbol for obtaining the frequency response and the transmission power of the data part subjected to the spectrum encoding. This phenomenon is caused when the the propagation path estimation symbol is transmitted at a high transmission power because the receiver is required to accurately estimate the propagation path between the transmission and reception antennas in order to secure a high communication reliability. Usually, for the propagation path estimation symbol, a signal having a low PAPR is used for avoiding the signal distortion by the HPA.

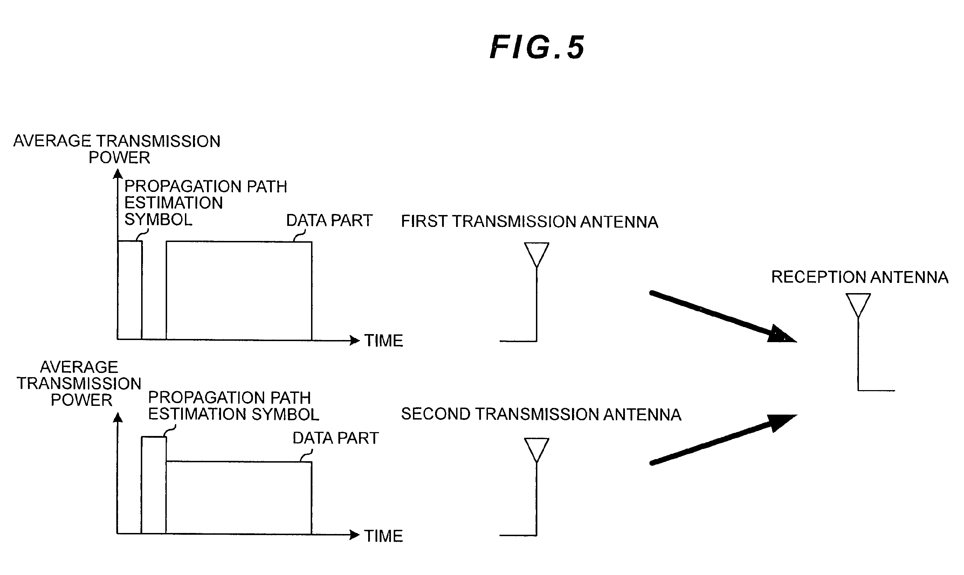

Fig. 5 is a diagram showing a state of transmitting the propagation path estimation symbol and the data in different transmission powers, respectively. The propagation path estimation symbol is disposed at the head of a packet and the data follows after that. Assuming a poor PAPR of the data part transmitted from the second transmission antenna, the average transmission power transmitted from the second antenna is reduced. When the communication is carried out in such a power relationship and the frequency response calculated by the propagation path estimation unit for each of the sub-carriers is denoted by h (k) , the frequency response of the data part becomes $\sqrt{\alpha}$ x h(k) (0 < $\alpha$ < 1). This $\alpha$ is the above described correction term in the receiver and the data having a poor SNR and a low transmission power is synthesized with a unreasonably high weighting unless this value is taken into consideration.

While Fig. 5 shows the propagation path estimation symbol from the first transmission antenna and the propagation path estimation symbol from the second transmission antenna as both of the symbols are orthogonal to each other temporally (TDM: Time Division Multiplexing), this is an example and there is another method such as a method of transmission by sub-carrier division (FDM: Frequency Division Multiplexing) or a method of transmission by symbol division (CDM: Code Division Multiplexing). Here, when the frequency responses calculated from the propagation path estimation signals are denoted by h1(k) and h2(k), respectively, the same as above, the formulas (6) and (7) become the following formulae, respectively (here, the noise terms are omitted).

[Formula 11]

$$r'(2m-1) = h1(2m-1) \times f(2m-1) + \sqrt{\alpha} \times h2(2m-1) \times f(2m)^*$$
$$r'(2m) = h1(m) \times f(2m) - \sqrt{\alpha} \times h2(m) \times f(2m-1)^* \quad \cdots \quad (11)$$

{Formula 12]

$$rr'(2m-1) = h1(2m-1)^* \times r'(2m-1) - \sqrt{\alpha} \times h2(2m) \times r'(2m)^*$$
$$rr'(2m) = \sqrt{\alpha} \times h2(2m-1)^* \times r'(2m-1) + h1(2m-1) \times r'(2m)^* \quad \cdots \quad (12)$$

Further, the formulae (8) and (9) become the following formulae, respectively.

[Formula 13]

$$rr'(2m-1) = (|h1(2m-1)|^2 + \alpha \times |h2(2m)|^2)f(2m-1)$$
$$+ \sqrt{\alpha} \times \{h1(2m-1)^* h2(2m-1) - h1(2m)^* h2(2m)\}f(2m)$$
$$rr'(2m) = (|h1(2m)|^2 + \alpha \times |h2(2m-1)|^2)f(2m)$$
$$+ \sqrt{\alpha} \times \{h1(2m-1)^* h2(2m-1) - h1(2m)^* h2(2m)\}f(2m-1) \quad \cdots \quad (13)$$

[Formula 14]

$$h'(2m-1) = (|h1(2m-1)|^2 + \alpha \times |h2(2m)|^2)$$
$$h'(2m) = (|h1(2m)|^2 + \alpha \times |h2(2m-1)|^2) \quad \cdots \quad (14)$$

Subsequently, the data can be demodulated in the same method as that described above. In the formula (13), terms of frequency responses from the second transmission antenna h2 (2m) and h2 (2m - 1) multiplied by $\sqrt{\alpha}$ correspond to the above described correction. In this manner, although the diversity gain is reduced by the reduction of the transmission power in one of the transmission antennas, it becomes possible to obtain the diversity gain on the receiving side by preventing the PAPR characteristic deterioration on the transmission side.

(Second embodiment)

The DFT-S-OFDM has a possibility to be employed for the uplink communication system in the cellular system because of its good PAPR characteristic. In the uplink, each terminal controls transmission power such that respective receiving powers of transmission signals transmitted from each of the terminals at the same time become approximately the same as each other at a base station. While generally such a method is called simply transmission power control, in the present embodiment, there will be explained a method of introducing a DFT-S-OFDM signal subjected to the spectrum encoding efficiently into the transmission power control system.

In the present embodiment, for simplicity of explanation, the transmission power control is assumed to be performed in a 3 dB step for each antenna. Specifically, it is assumed to use the transmission powers of seven steps shown in the following table.

[Table 1]

| Power step | 0 | 1 | 2 | 3 | 4 | 5 | 6 |
|---|---|---|---|---|---|---|---|
| Transmission power (mW) | 0 (No transmission) | 1 | 2 | 4 | 8 | 16 | 32 |

Further, an amplifier region which can be used is different depending on the PAPR characteristic as shown in the first embodiment. Here, for convenience, it is assumed that the amplifier output power up to the step 6 can be used for a signal series having a good PAPR characteristic and the amplifier output power up to the step 4 can be used for a signal series having a poor PAPR characteristic. That is, there is a difference of approximate 6 dB in the PAPR characteristic in this case.

First, the transmission power control is shown for a case of always using the spectrum encoding. Hereinafter, explanation will be made by calling an antenna to transmit a signal series having a good PAPR characteristic a first transmission antenna and calling an antenna to transmit a signal series having a poor PAPR characteristic a second antenna. Basically, when the spectrum encoding is performed, the transmission performed in the same power from both of the antennas as shown in the first embodiment has a better power efficiency than the transmission performed in different powers. Accordingly, it becomes possible to perform the control in five steps as shown in the following table.

[Table 2]

| Power control step | 1 | 2 | 3 | 4 | 5 |
|---|---|---|---|---|---|
| Transmission power combination | (1, 1) | (2, 2) | (3, 3) | (4, 4) | (6, 4) |

In Table 2, (x, y) means that the signal is transmitted from the first transmission antenna in the power step of x and transmitted from the second transmission antenna in the power step of y. Further, in Table 2, the signals having the same transmission power are transmitted from both of the antennas, respectively, up to the power control step 4. Note that only the power of the first transmission antenna is increased in 6 dB in the power control step 5 and a 3 dB step is realized as a whole. In this manner, in the transmission power without receiving the influence of the PAPR, the signals having the same power are transmitted without depending on the PAPR characteristic of the signal, and, in the transmission power in which the influence of the PAPR characteristic appears, only the transmission power of the antenna to transmit the signal having a good PAPR characteristic is controlled (to be larger), and thereby it becomes possible to build an efficient transmission power control system.

Next, Table 3 shows a control method when the signal is transmitted from the first transmission antenna as far as possible in sufficient consideration of the uplink case. This is a seven step control.

[Table 3]

| Power control step | 1 | 2 | 3 | 4 | 5 | 6 | 7 |
|---|---|---|---|---|---|---|---|
| Transmission power combination | (1, 0) | (2, 0) | (3, 0) | (4, 0) | (5, 0) | (6, 0) | (6, 4) |

In this Table 3, only the first transmission antenna is used up to the power step 6. The first transmission antenna has a good PAPR characteristic as shown above to be able to transmit the signal without distortion. In the last step 7, the signals are transmitted from both of the antennas, respectively, by the use of the spectrum encoding. The transmission power is increased approximately only in 1 dB from the step 6 to this step 7. However, because of the encoding gain (diversity gain) by the spectrum encoding, it is possible to realize improvement exceeding 1 dB in an SNR (Signal power to Noise power Ratio) of the receiver. Note that the transmission method is changed between the power control steps 6 and 7 and the transmission method needs to be recognized preliminarily between the transmission and reception apparatuses.

(Third embodiment]

In the present embodiment, there will be explained a method of applying the spectrum encoding to dynamic spectrum control (DSC: Dynamic Spectrum Control) DFT-S-OFDM, that is, DSC-DFT-S-OFDM, which improves flexibility of the sub-carrier allocation method in the DFT-S-OFDM technique. In advance of the explanation thereof, the DSC-DFT-S-OFDM will be explained.

As shown in FIG.10(a) and FIG.10(b), the localized allocation (L allocation) and the distributed allocation (D allocation) are proposed for the sub-carrier allocation method in the conventional DFT-S-OFDM. While both of the allocation methods have extremely good PAPR characteristics, there is a problem that the degree of freedom of selecting the sub-carrier is low and a sub-carrier having a good communication quality cannot be selected appropriately. Further, even when the sub-carrier is selected perfectly freely, the PAPR characteristic is the same as that of the conventional OFDM and the merit of the good PAPR characteristic in the DFT-S-OFDM cannot be utilized. The PAPR control type DSC-DFT-S-OFDM (hereinafter, P-DSC-DFT-S-OFDM) is a communication system which allows the PAPR characteristic deterioration to some extent, and the method prepares several kinds of allocation method each having an improved degree of freedom, although not a perfect freedom, in the sub-carrier selection and selects the allocation method by the required PAPR characteristic and sub-carrier selection freedom.

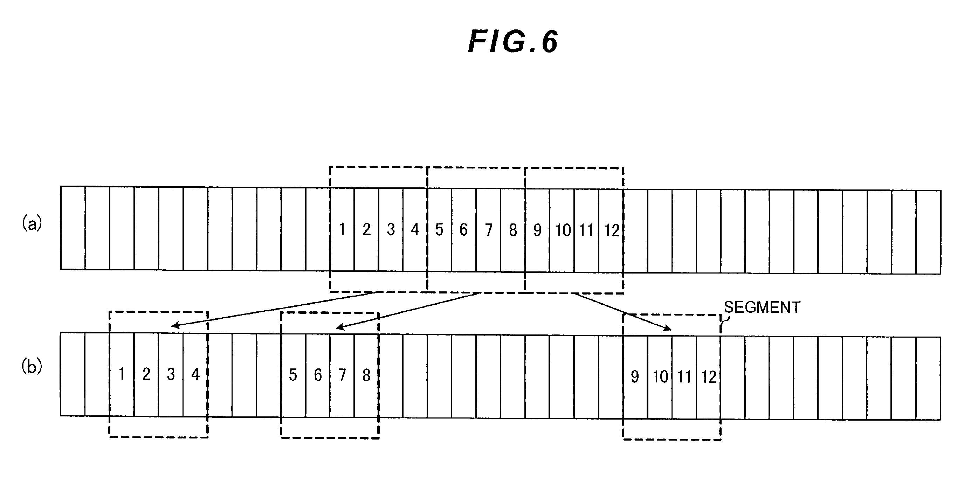

Fig. 6 is a diagram showing an example of the sub-carrier allocation in the P-DSC-DFT-S-OFDM. Fig. 6 assumes that the number of available sub-carriers is 36 and the number of sub-carriers to be used is 12 among them. Further, the upper side of Fig. 6 is an example of the L allocation which is also shown in the conventional example. The lower side of Fig. 6 is an example of dividing the sub-carriers to be used into three groups each having four sub-carriers (hereinafter, this group is called a segment) and allocating the sub-carriers in the unit of the segment, differently from the L allocation on the upper side of Fig. 6. As the number of sub-carriers within this segment is reduced, the sub-carrier selection freedom is improved but the PAPR characteristic is deteriorated. In the following, the allocation method using the segment division as shown on the lower side of Fig. 6 is called "LS allocation" for simplicity.

For the P-DSC-DFT-S-OFDM system performing this LS allocation, it is necessary to associate the number of sub-carriers used for the spectrum encoding and the number of sub-carriers within the segment in the spectrum encoding. First, there will be described a case of performing the spectrum encoding as shown in the first and the second embodiments, that is, the spectrum encoding for two sub-carriers in a pair.

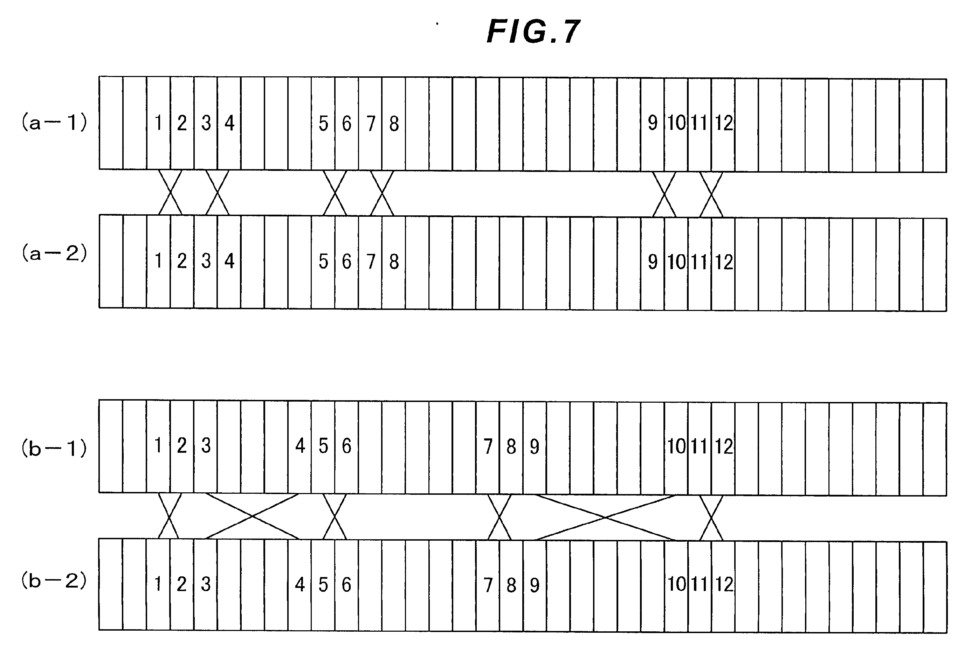

FIG. 7(a) and FIG. 7(b) are diagrams each showing an example of the sub-carrier allocation for performing the spectrum encoding on a DSC-DFT-S-OFDM signal. FIG. 7(a) assumes that the number of sub-carriers within the segment is four. Further, the upper side of FIG. 7(a) shows a transmission signal from the first transmission antenna and the lower side of FIG. 7(a) shows a transmission signal from the second transmission antenna. In FIG. 7(a), a straight line connects the sub-carriers which are the sub-carrier pair shown in the formula (4) to be subjected to the spectrum encoding. Similarly, FIG. 7(b) shows a case in which the number of sub-carriers within the segment is three. FIG. 7(b) shows the sub-carrier to be used by the first transmission antenna or the second transmission antenna the same as FIG. 7(a), and a straight line connects the sub-carriers which are the sub-carrier pair shown in the formula (4) to be subjected to the spectrum encoding.

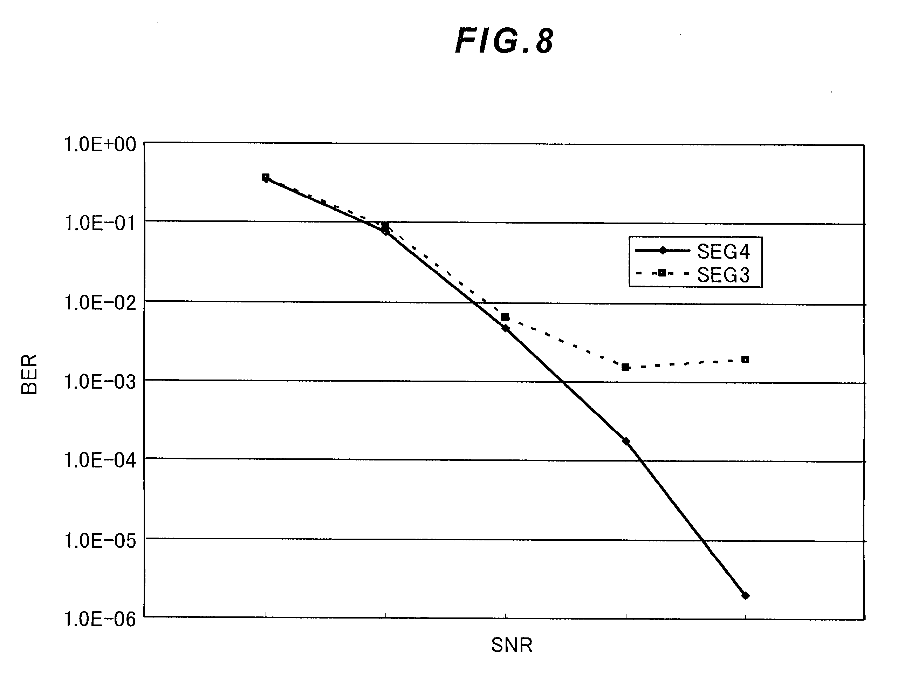

Fig. 8 is a diagram showing an SNR (Signal to Noise Ratio) versus error-rate (BER: Bit Error Rate) characteristic. Specifically, Fig. 8 compares the SNR versus error-rate characteristic of a certain propagation path between the case of the segmentation in four sub-carriers as in FIG. 7(a) and the case of the segmentation in three sub-carriers as in FIG. 7(b). Note that the influence of the PAPR deterioration is not considered. In Fig. 8, the horizontal axis shows an average SNR across a whole band in the receiver and the average SNR increases from the left to the right. Further, the vertical axis shows the BER. The solid line SEG4 in the graph shows the SNR-error rate characteristic in a segmentation case as in FIG. 7(a) and the dotted line SEG3 shows the SNR-error rate characteristic in a segmentation case as in FIG. 7(b).

Usually, FIG. 7 (b) is considered to have a better characteristic since the sub-carrier selection freedom is improved when the number of sub-carriers composing the segment is small. However, as apparent from Fig. 8, FIG. 7 (a) shows a better error rate characteristic. This is considered because actual sub-carrier positions are separated in a sub-carrier pair (3, 4) and a sub-carrier pair (9, 10) and the correlation of the frequency response is reduced in FIG. 7 (b). That is, this is considered because the frequency response difference shown in the second term of the formula (8) is increased.

From the above result, when the spectrum encoding is performed on the P-DSC-DFT-S-OFDM signal, it is possible to improve the characteristic and to improve the communication efficiency of the entire system by setting the number of the sub-carriers within the segment to be an integer multiple of the number of sub-carriers used for the spectrum encoding.

(Fourth embodiment)

While the best relationship between the number of the sub-carriers within the segment and the number of pairs for the spectrum encoding is shown in the third embodiment, a method of selecting the sub-carriers in the P-DSC-DFT-S-OFDM system performing the spectrum encoding is shown in the present embodiment. The same as in the above embodiments, first the number of the transmission antennas in the spectrum encoding is set to be two, and then a more generalized case will be explained. The following formula is the same as the formula (8) and shows the signal components after the spectrum synthesis in the receiver.

[Formula 15]

$$rr(2m-1) = (|h1(2m-1)|^2 + |h2(2m)|^2)f(2m-1)$$
$$+ \{h1(2m-1)^* h2(2m-1) - h1(2m)^* h2(2m)\}f(2m)^*$$
$$rr(2m) = (|h1(2m)|^2 + |h2(2m-1)|^2)f(2m)$$
$$+ \{h1(2m-1)^* h2(2m-1) - h1(2m)^* h2(2m)\}f(2m-1)^* \quad \cdots \quad (15)$$

That is, the sub-carrier allocation unit 6-1 or 6-2 selects the sub-carrier, to which the frequency-domain signal encoded by the spectrum encoding unit 5 is allocated, on a basis of a squared absolute value of the frequency response. In the formula (15), the coefficient value multiplying the first term f may be large and the coefficient value multiplying the second term f may be small for selecting the sub-carrier so as to realize a good quality in the received signal rr after the spectrum synthesis. For the coefficient of the first term, which is different between the even number sub-carrier and the odd number sub-carrier, there is considered a method of representation by either one or a method of taking an average value. The method utilizing the representative value calculates

[Formula 16]

$$|h1(2m-1)|^2 + |h2(2m)|^2 \quad \cdots (16)$$

or

[Formula 17]

$$|h1(2m)|^2 + |h2(2m-1)|^2 \quad \cdots (17)$$

for all the sub-carrier pairs and preferentially selects the sub-carrier pair having a larger value, and thereby can realize a highly accurate spectrum-encoded P-DSC-DFT-S-OFDM. Generally, when the number of the transmission antennas is M, the method can realize the highly accurate spectrum-encoded P-DSC-DFT-S-OFDM by comparing the following formula for a natural number m which does not exceed the total number of the sub-carriers.

[Formula 18]

$$\sum_{k=1}^{M} |hk(k+(m-1) \times M)|^2 \quad \cdots (18)$$

or

[Formula 19]

$$\sum_{k=1}^{M} |hk(M-k+1+(m-1) \times M)|^2 \quad \cdots (19)$$

The method utilizing the average value calculates the following formula having a variable m for all the sub-carrier pairs and preferentially selects the sub-carrier pair having a larger value, and thereby can realize a highly accurate spectrum-encoded P-DSC-DFT-S-OFDM.

[Formula 20]

$$|h1(2m-1)|^2 + |h1(2m)|^2 + |h2(2m-1)|^2 + |h2(2m)|^2 \quad \cdots (20)$$

Generally, when the total number of the sub-carriers is N and the number of the transmission antennas is M, the method can realize the highly accurate spectrum-encoded P-DSC-DFT-S-OFDM by comparing the following formula for a natural number m which does not exceed the total number of the sub-carriers.

[Formula 21]

$$\sum_{k=1}^{M}\sum_{k'=1}^{M} | hk'(k+(m-1)\times M)|^2 \quad \cdots (21)$$

For the second term, it is possible to realize a highly accurate spectrum-encoded P-DSC-DFT-S-OFDM by calculating the following formula having a variable m for all the sub-carrier pairs and preferentially selecting the sub-carrier pair having a smaller value.

[Formula 22]

$$h1(2m-1)^* h2(2m-1) - h1(2m)^* h2(2m) \quad \cdots (22)$$

The formula (22) means that the propagation path variation is small in the sub-carrier pair performing the spectrum encoding. Generally, this component also depends on the encoding method and there is a method of defining an error vector e and performing the estimation using e without applying the formula (22) directly. An error vector el between the sub-carriers in the antenna 1 and the receiving antenna is defined as follows.

[Formula 23]

$$el(k) = | hl(k+1) - hl(k) | / | hl(k) | \quad \cdots (23)$$

When the total number of the sub-carriers is N and the number of the transmission antennas is M, it is possible to realize a highly accurate spectrum-encoded P-DSC-DFT-S-OFDM by calculating the following formula having a variable m for all the sub-carrier pairs and preferentially selecting the sub-carrier pair having a smaller value.

[Formula 24]

$$\sum_{k=1}^{M-1}\sum_{k'=1}^{M} | ek'(k+(m-1)\times M)|^2 \quad \cdots (24)$$

Each of the formulas (16) to (24) shown here is a one reference for the selection and does not mean that the formulae need to be always satisfied.
As explained above, the present embodiment performs the encoding on each of the frequency-domain signal in the spectrum encoding unit 5 and thereby it becomes possible to obtain the diversity gain at a maximum for the decoding in the receiving side apparatus.

**Claims**

1. A wireless transmission apparatus which has a plurality of antennas and performs radio transmission by encoding a signal used in a single carrier communication system, the apparatus comprising:

   a time-frequency conversion unit (4) time-frequency converting a plurality of input time-domain signals to output a plurality of frequency-domain signals;
   a spectrum encoding unit (5) encoding the frequency-domain signal to be transmitted from at least one antenna so that PAPR (Peak to Average Power Ratio) characteristics before and after the encoding become the same;
   a control unit (12) controlling transmission power of the antenna for transmitting said frequency-domain signal having the same PAPR characteristic before and after the encoding to be larger than the transmission power of the antenna for transmitting the signal except said frequency-domain signal having the same PAPR characteristic before and after the encoding; and

a transmission unit (6-1,...,11) frequency-time converting said encoded frequency-domain signal to radio-transmit a time-domain signal using at least one antenna with the transmission power controlled by said control unit.

2. The wireless transmission apparatus according to Claim 1, further comprising
a control unit (12) having a table preliminarily associating a transmission power step with each of a plurality of transmission power values and individually controlling, according to said table, the transmission power of the antenna for transmitting said frequency-domain signal having the same PAPR characteristics before and after the encoding and the transmission power of the antenna for transmitting the signal except said frequency-domain-signal having the same PAPR characteristics before and after the encoding.

3. The wireless transmission apparatus according to Claim 2, wherein
said control unit (12), while controlling the transmission power so as to use only the antenna for transmitting said frequency-domain signal having the same PAPR characteristics before and after the encoding in said transmission power step in which the transmission power value is smaller than a predetermined value, controls the transmission power so as to use the antenna for transmitting said frequency-domain signal having the same PAPR characteristics before and after the encoding and the antenna for transmitting the signal except said frequency-domain signal having the same PAPR characteristics before and after the encoding in said transmission power step in which the transmission power value is larger than a predetermined value.

4. The wireless transmission apparatus according to any one of Claims 1 to 3, still further comprising
a sub-carrier allocation unit (6-1,6-2) allocating each of the frequency-domain signals encoded by said spectrum encoding unit (5) to consecutive sub-carriers.

5. The wireless transmission apparatus according to Claim 4, wherein
said sub-carrier allocation unit (6-1,6-2) groups the plurality of sub-carriers into a plurality of groups and allocates each of the frequency-domain signals encoded by said spectrum encoding unit (5) to the consecutive sub-carriers in said group.

6. The wireless transmission apparatus according to Claim 5, wherein
said sub-carrier allocation unit (6-1, 6-2) groups the sub-carriers such that the number of sub-carriers in said group becomes integer multiple of the number of the frequency-domain signals to be encoded by said spectrum encoding unit (5).

7. The wireless transmission apparatus according to Claim 6, wherein
said sub-carrier allocation unit (6-1, 6-2) selects the sub-carrier, to which the frequency-domain signal encoded by said spectrum encoding unit (5) is allocated, on a basis of a squared absolute value of frequency response.

8. The wireless transmission apparatus according to Claim 5 or Claim 6, wherein
said sub-carrier allocation unit (6-1,6-2) selects the sub-carrier, to which the frequency-domain signal encoded by said spectrum encoding unit (5) is allocated, on a basis of frequency response variations of the neighboring sub-carriers.

9. The wireless transmission apparatus according to Claim 1, wherein
said control unit (12) controls the transmission power of a propagation path estimation symbol transmitted from the antenna for transmitting the signal except said frequency-domain signal having the same PAPR characteristics before and after the encoding to be larger than the transmission power of data transmitted from the same antenna.

10. A wireless reception apparatus which receives a signal transmitted from the wireless transmission apparatus according to Claim 9, the wireless reception apparatus
performing frequency synthesis according to a difference between the transmission power of propagation path estimation symbol and the transmission power of data to demodulate the data.

11. A wireless communication system, comprising:

the wireless transmission apparatus according to Claim 9; and

the wireless reception apparatus according to Claim 10.

12. A wireless transmission method which performs radio transmission by using a plurality of antennas and by encoding a signal used in a single carrier communication system, the method comprising the steps of:

time-frequency converting a plurality of input time-domain signals to output a plurality of frequency-domain signals, in a time-frequency conversion unit;

encoding the frequency-domain signal to be transmitted from at least one antenna so that PAPR (Peak to Average Power Ratio) characteristics before and after the encoding become the same, in a spectrum encoding unit;

controlling transmission power of the antenna for transmitting said frequency-domain signal having the same PAPR characteristic before and after the encoding to be larger than the transmission power of the antenna for transmitting the signal except said frequency-domain signal having the same PAPR characteristic before and after the encoding, in a control unit; and

frequency-time converting said encoded frequency-domain signal to radio-transmit a time-domain signal using at least one antenna with the transmission power controlled by said control unit, in a transmission unit.

## FIG.1

EP 2 251 997 A1

# FIG.2

**FIG.3**

21: RF UNIT → 22: A/D CONVERSION UNIT → 23: SYMBOL SYNCHRONIZATION UNIT → 24: S/P CONVERSION UNIT → 25: DFT UNIT → 26: PROPAGATION PATH ESTIMATION UNIT → 27: SUB-CARRIER EXTRACTION UNIT → 28: SPECTRUM SYNTHESIS UNIT → 29: WEIGHTING UNIT → 30: IDFT UNIT → 31: P/S CONVERSION UNIT → 32: DEMODULATION UNIT → 33: DECODING UNIT

34: CONTROL UNIT — CONTROL INFORMATION A'

# FIG.4

r(1) ⟶

r(2) ⟶

r(n) ⟶

h1(1) ⟶

h1(2) ⟶

h1(n) ⟶

h2(1) ⟶

h2(2) ⟶

h2(n) ⟶

SPECTRUM
SYNTHESIS
UNIT

⟶ rr(1)

⟶ rr(2)

⟶ rr(n)

⟶ h(1)

⟶ h(2)

⟶ h(n)

# FIG.5

AVERAGE TRANSMISSION
POWER

PROPAGATION PATH
ESTIMATION
SYMBOL

DATA PART    FIRST TRANSMISSION ANTENNA

TIME

AVERAGE
TRANSMISSION
POWER

PROPAGATION PATH
ESTIMATION SYMBOL

SECOND TRANSMISSION ANTENNA

DATA PART

TIME

RECEPTION ANTENNA

EP 2 251 997 A1

## FIG.6

EP 2 251 997 A1

(a)

| 1 | 2 | 3 | 4 | 5 | 6 | 7 | 8 | 9 | 10 | 11 | 12 |

SEGMENT

(b)

| 1 | 2 | 3 | 4 |  | 5 | 6 | 7 | 8 |  | 9 | 10 | 11 | 12 |

## FIG.7

EP 2 251 997 A1

# FIG.8

# FIG.9

EP 2 251 997 A1

# FIG.10

Localized

Distributed

IDFT

IDFT

DATA

DATA

DATA

DATA

DATA

ALLOCATION TO CONSECUTIVE
SUB-CARRIERS

ALLOCATION TO
SUB-CARRIERS AT REGULAR
INTERVALS

(a)

(b)

EP 2 251 997 A1

## INTERNATIONAL SEARCH REPORT

| International application No. |
| --- |
| PCT/JP2009/052895 |

A.  CLASSIFICATION OF SUBJECT MATTER
*H04J11/00*(2006.01)i, *H04B7/02*(2006.01)i, *H04B7/12*(2006.01)i, *H04L27/01*(2006.01)i, *H04W52/04*(2009.01)i, *H04W72/04*(2009.01)i

According to International Patent Classification (IPC) or to both national classification and IPC

B.  FIELDS SEARCHED

Minimum documentation searched (classification system followed by classification symbols)
H04J11/00, H04B7/02, H04B7/12, H04L27/01, H04W52/04, H04W72/04

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y<br>A | Alcatel, Effect of different ST/SF Coding and Mapping schemes on the PAPR of the SC-FDMA in E-UTRA Uplink, 3GPP TSG RAN WG1 #45 R1-06-1123, 2006.05.08, pp.1-6 | 1-2,4-5,7-12<br>3,6 |
| Y<br>A | WO 2007/113913 A1  (Matsushita Electric Industrial Co., Ltd.),<br>11 October, 2007 (11.10.07),<br>Par. Nos. [0015] to [0062], [0072]<br>(Family: none) | 1-2,4-5,7-12<br>3,6 |
| Y | Keigo MASHIMA, Seiichi SANPEI, "Dynamic Spectrum Seigyo o Mochiita Kotaiiki Single Carrier Denso Hoshiki ni Kansuru Kento", IEICE Technical Report, vol.106, no.480, 19 January, 2007 (19.01.07), pages 97 to 102, RCS2006-233 | 5,7-8 |

[X] Further documents are listed in the continuation of Box C.          [ ] See patent family annex.

| | |
| --- | --- |
| *       Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>18 May, 2009 (18.05.09) | Date of mailing of the international search report<br>26 May, 2009 (26.05.09) |
| --- | --- |
| Name and mailing address of the ISA/<br>   Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/052895

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-374224 A (Nippon Telegraph And Telephone Corp.), 26 December, 2002 (26.12.02), Fig. 2 & US 7242720 B2 & EP 1249980 A2 | 9-11 |
| P,A | Nokia Siemens Networks, Nokia, Uplink Multiple access for LTE-Advanced, RAN WG1 Meeting #53bis R1-082609, 2008.06.30, pp.1-11 | 1-12 |
| P,A | NEC Corp., 3GPP RAN IMT-Advanced Workshop REV-080022, 2008.04.07, pp.1-27 | 1-12 |
| P,A | Sharp, Uplink Multiple Access Scheme for LTE-Advanced, 3GPP TSG RAN WG1 Meeting #54 R1-082787, 2008.08.18, pp.1-4 | 1-12 |
| P,A | Takamichi INOUE et al., "Furenzoku Spectrum Soshin ni Okeru Reference Shingo no Cubic Metric Tokusei Hyoka", Proceedings of the 2008 Society Conference of IEICE 1, 02 September, 2008 (02.09.08), page 334, B-5-21 | 1-12 |
| P,A | Fujitsu, Short study on PAPR property of clustered DFT-S-OFDM, 3GPP TSG-RAN1 #54bis R1-083781, 2008.09.29, pp.1-14 | 1-12 |
| A | Lee, K.F. and Williams, D.B., A space-frequency transmitter diversity technique for OFDM systems, Global Telecommunications Conference, 2000. GLOBECOM '00. IEEE, vol.3, 2000, pp.1473-1477 | 1-12 |
| A | JP 2004-304760 A (Matsushita Electric Industrial Co., Ltd.), 28 October, 2004 (28.10.04), Full text; all drawings & US 2005/0181737 A1 & US 2007/0087701 A1 & EP 1511189 A1 & WO 2004/049596 A1 | 1-12 |
| A | WO 2006/060651 A2 (MAK ACQUISITIONS L.L.C.), 08 June, 2006 (08.06.06), Full text; all drawings & JP 2008-522560 A & US 2006/0245346 A1 & EP 1817857 A | 1-12 |

Form PCT/ISA/210 (continuation of second sheet) (April 2007)